# EUROPEAN PATENT SPECIFICATION

(11) **EP 3 262 377 B1**
(45) Date of publication and mention of the grant of the patent: **21.12.2022**
(21) Application number: 16706362.7
(22) Date of filing: 26.02.2016
(51) Int. Cl.: G01C 21/34, G08G 1/0968

(54) **ROUTE PLANNING APPARATUS AND METHOD**
ROUTENPLANUNGSVORRICHTUNG UND -VERFAHREN
APPAREIL ET PROCÉDÉ DE PLANIFICATION D'ITINÉRAIRE

(30) Priority: 27.02.2015 GB 201503359
(43) Date of publication of application: 03.01.2018
(73) Proprietor: Jaguar Land Rover Limited, Coventry, Warwickshire CV3 4LF (GB)
(72) Inventor: STUCHFIELD, Phil, Coventry Warwickshire CV3 4LF (GB); CAMPS, Marlon, Coventry Warwickshire CV3 4LF (GB)
(74) Representative: Westcott, Matthew John George
(86) International application number: PCT/EP2016/054043
(87) International publication number: WO 2016/135274

(56) References cited:
- US-A1- 2009 005 097
- US-A1- 2014 379 252
- US-B1- 8 311 741
- US-B1- 8 655 378

## Description

### TECHNICAL FIELD

The present disclosure relates to a route planning apparatus and method. More particularly, but not exclusively, the present disclosure relates to a method of planning a route to a destination; to a route planning apparatus; and to a vehicle having a route planning apparatus.

### BACKGROUND

An occupant in a vehicle, such as an automobile, can connect to a wireless communication network while the vehicle is travelling. The wireless communication network can, for example, be a cellular network. However, when the vehicle is travelling, connectivity to the wireless communication network may vary, for example due to varying network coverage or signal strength. This means that vehicle occupants have unreliable or inconsistent connectivity to the wireless communication network. This problem is compounded by the fact that the occupant cannot determine how the connectivity will vary during a journey.

US 2014/379252 A1 and US 8 311 741 B1 disclose the selection of a route on which a scheduled event of a user (like a telephone call) can take place without communication network interruptions.

US 8 655 378 B1 and US 2009/005097 A1 disclose warning a user who is driving on a selected route, when a loss of communication connectivity will take place, so that the user can stop and complete a task needing wireless connectivity while the connection is still good.

It is against this background that the present invention has been conceived. At least in certain embodiments, the present invention seeks to overcome or ameliorate at least some of the aforementioned problems.

### SUMMARY OF THE INVENTION

Aspects and embodiments of the present invention relate to a method of planning a route to a destination; to a route planning apparatus; and to a vehicle having a route planning apparatus.

According to an aspect of the present invention there is provided a method of planning a route to a destination according to claim 1.

The routing algorithm may be defined in software or hardware.

In an embodiment, the routing algorithm can use the communications network database to plan the route to the destination such that a connection to the wireless communication network is maintained for at least a defined portion of the route. The portion of the route for which connection to the wireless communication network is maintained may be specified by a user. Alternatively, the portion of the route could be determined automatically, for example to enable a telephone call or a video call to be conducted whilst the vehicle travels along the planned route.

The routing algorithm may be configured to estimate when and/or where a connection to the wireless communication will be lost. The routing algorithm may be configured to dynamically change the planned route to maintain a connection to the wireless communication network. The method may comprise quantifying routes in terms of their connectivity to allow the user to make an informed decision as to the appropriate route. For example, the method may comprise specifying a percentage of the journey (for example 95%) for which connection to the wireless communication network is available.

The communications network database may define a network connection type, for example to differentiate between 2G, 3G, 4G and 5G cellular network connections. It will be appreciated that the method can be applied to other types of cellular network connections.

The communications network database defines one or more network parameters. The one or more network parameters may define one or more of the following: signal strength, transfer speeds, dropped call information, data quality, bandwidth, bit error rate, throughput, coverage, bandwidth and network capacity. The signal strength information may, for example, classify a signal as being strong or weak at a particular location. The communications network database may define network provider information (for example transfer speeds, throughput etc.).

The one or more network parameters can be defined throughout a geographic region corresponding to the road network defined by the map database. Alternatively, the one or more network parameters can be defined in those regions proximal to the roads making up the road network.

The routing algorithm may use the communications network database to plan the route to the destination to avoid areas in which the one or more network parameter is below one or more defined thresholds. The routing algorithm may use the communications network database to plan the route to the destination to remain in areas in which the one or more network parameters are above one or more defined thresholds.

The communications network database may define location information of one or more local area wireless connections. The local area wireless connection can be a Wi-Fi connection, for example. The one or more network parameters could also identify those local area wireless connections that are available for connection, for example those operated by a chain of restaurants or cafés.

The one or more network parameters could be updated periodically, for example by synchronising the communications network database with a centralised database. Alternatively, or in addition, the one or more network parameters for the wireless communication network may comprise historic data collected during one or more previous journeys. The route planning apparatus could collect data relating to network type (for example 2G, 3G, 4G, 5G cellular networks); local area wireless connections (for example the location and signal strength of a WiFi connection); dropped call information; network provider information (for example transfer speeds, throughput etc.). Thus, the historic data may be collected during any journey and used to update the communications network database. The collected information may, for example, be collated with tracking information from a navigation positioning system module.

The method comprises using a diary database to identify a scheduled time for an event requiring access to the wireless communication network. The routing algorithm is configured to plan the route such that a connection to the wireless communication network is available at the scheduled time. The routing algorithm is configured to schedule a stop at the scheduled time in a location where the connection to the wireless communication network is available. This may, for example, allow the user to park the vehicle and connect to the wireless communication network at the scheduled time, for example to conduct a telephone or video call.

The method may comprise using a display screen to display one or more network parameters over the road network. The one or more network parameters may be displayed in one or more layers. A different network parameter may be displayed in each layer. The one or more layers may define one or more of the following: 2G coverage, 3G coverage, 4G coverage, 5G coverage, local area wireless connection (such as Wi-Fi) coverage, dropped calls, network providers, signal strength, transfer speeds, etc. Each layer may be added over the route map to show the signal strength along a planned route.

According to a further aspect of the present invention there is provided a route planning apparatus according to claim 8.

The routing algorithm may use the communications network database to plan the route to the destination such that a connection to the wireless communication network is maintained for at least a defined portion of the route.

The routing algorithm may be configured to estimate when and/or where a connection to the wireless communication will be lost. The routing algorithm may dynamically change the planned route to maintain a connection to the wireless communication network.

The communications network database may define a network connection type, for example to differentiate between 2G, 3G, 4G and 5G cellular network connections.

The communications network database may define one or more network parameters. The one or more network parameters may define one or more of the following: signal strength, transfer speeds, dropped call information, data quality, bandwidth, bit error rate, throughput, coverage, bandwidth and network capacity. The communications network database may define network provider information (for example transfer speeds, throughput etc.).

The routing algorithm may use the communications network database to plan the route to the destination to avoid areas in which the one or more network parameters are below one or more defined thresholds. The user may have an important call that they do not want to drop, so the route may be based on having good connectivity throughout journey avoiding any areas of weak coverage. The route may be generated based on maintaining connectivity. This route could be presented to the user as one of several possible routes.

The routing algorithm may use the communications network database to plan the route to the destination to remain in areas in which the one or more network parameters are above one or more defined threshold.

The communications network database may define location information of one or more local area wireless connections. The local area wireless connections may, for example, be a Wi-Fi connection.

The one or more network parameters may comprise historic data collected during one or more previous journeys. The route planning apparatus could collect data relating to network type (for example 2G, 3G, 4G, 5G cellular networks); local area wireless connections (for example location and signal strength of a WiFi connection); dropped call information; network provider information (for example transfer speeds, throughput etc.).

The electronic processor is configured to access a diary database to identify a scheduled time for an event requiring access to the wireless communication network. The routing algorithm is be configured to plan the route such that a connection to the wireless communication network is available at the scheduled time. The routing algorithm is configured to schedule a stop at the scheduled time in a location where the connection to the wireless communication network is available.

The route planning apparatus may comprise a display screen for displaying the one or more network parameters and the road network. The one or more network parameters may be overlaid onto the road network. The one or more network parameters may be displayed in one or more layers. A different network parameter may be displayed in each layer. The one or more layers may define one or more of the following: 2G coverage, 3G coverage, 4G coverage, 5G coverage, local area wireless connection (such as Wi-Fi) coverage, dropped calls, network providers, signal strength, transfer speeds, etc. Each layer may be added over the route map to show the one or more network parameters along a planned route.

According to a further aspect of the present invention there is provided a vehicle comprising a route planning apparatus as described herein.

The route planning apparatus has been described herein with reference to a plurality of databases, including the map database and the communications network database. It will be appreciated that these databases may be maintained independently of each other or may be combined. The databases may be stored in one or more electronic memory devices.

Any controller or controllers described herein may suitably comprise a control unit or computational device having one or more electronic processors. Thus the system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memories associated with said controller to be executed on said computational device. A first controller may be implemented in software run on one or more processors. One or more other controllers may be implemented in software run on one or more processors, optionally the same one or more processors as the first controller. Other suitable arrangements may also be used.

### BRIEF DESCRIPTION OF THE DRAWINGS

One or more embodiments of the present invention will now be described, by way of example only, with reference to the accompanying figures, in which:
Figure 1 shows a schematic representation of a route planning apparatus in accordance with an embodiment of the present invention;
Figure 2 shows a first representative image generated by the route planning apparatus combining route planning and wireless network connectivity; and
Figure 3 shows a second representative image generated by the route planning apparatus combining route planning and local area wireless connection.

### DETAILED DESCRIPTION

A route planning apparatus 1 in accordance with an embodiment of the present invention will now be described with reference to the accompanying figures. The route planning apparatus 1 is configured to plan a route taking into account connectivity to a wireless communication network. The route planning apparatus 1 is suitable for use in a vehicle 2, such as an automobile. The route planning apparatus 1 could be integrated into a vehicle infotainment system; or could be an aftermarket device, for example configured to be mounted to a windshield or dashboard of the vehicle.

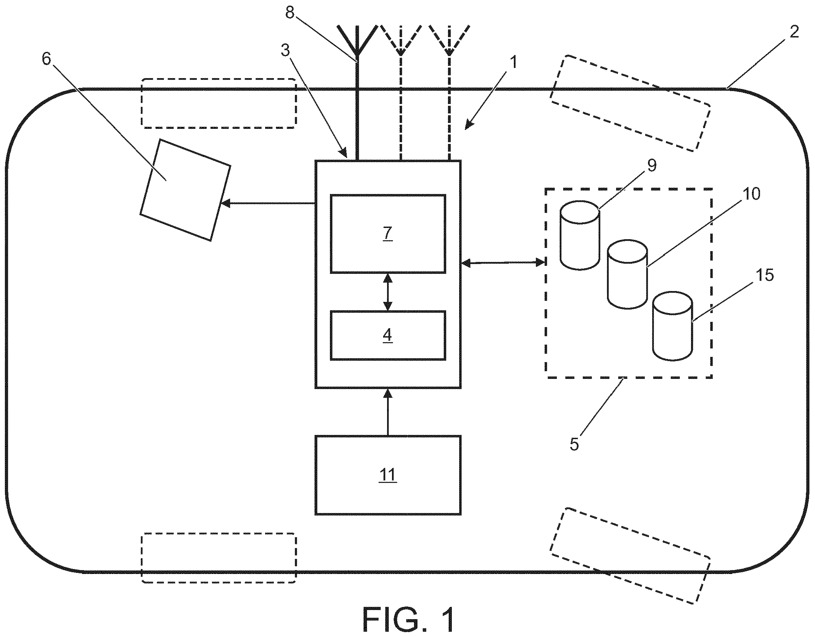

As shown in Figure 1, the route planning apparatus 1 comprises an electronic control unit 3, system memory 4, a storage device 5 and a display screen 6. The electronic control unit 3 comprises at least one electronic processor 7 configured to execute a set of software instructions stored in the system memory 4 to implement a routing algorithm to plan a route. The electronic control unit 3 is connected to one or more antennas 8 for receiving and/or transmitting radio frequency (RF) signals. The antenna 8 can be provided in the vehicle 2 as part of an on-board communications system, for example to provide cellular telephone connections, data transfer and navigation functions. A map database 9 and a communications network database 10 are stored on the storage device 5. The electronic control unit 3 is coupled to the storage device 5 and accesses the map database 9 and the communications network database 10 to plan the route. The electronic control unit 3 is connected to a navigation positioning system module 11 (such as GPS, Glonass, Galileo etc.) which operates in conventional manner to generate position data.

The map database 9 defines a road network in a geographic region, such as the United Kingdom, Europe or the United States of America. The communications network database 10 defines one or more network parameters for a wireless communication network. The wireless communication network is typically a cellular communication network for voice calls and/or data transfer. The communication network database 10 defines a signal strength to provide an indication of the local connectivity to the cellular communication network. The communication network database 10 can define the signal strength throughout the geographic region covered by the road network in the map database 9. In a variant, the signal strength could be defined along the road network in the map database 9. The communications network database 10 could be updated periodically, for example based on data obtained from network service provides. In addition to signal strength, the communication network database 10 can define other network parameter(s), such as one or more of the following: data quality, bandwidth, bit error rate, throughput, coverage, bandwidth, network capacity etc.

The communication network database 10 could be updated periodically, for example along with any system updates when the route planning apparatus 1 is synchronised. In the present embodiment the route planning apparatus 1 uses the antenna 8 to measure signal strength and to update the communications network database 10 with reference to the position data generated by the navigation positioning system module 11. The communication network database 10 can thereby be updated dynamically, for example as the vehicle 2 is travelling along a route. The communications network database 10 can, for example, store historic data relating to n routes (where *n*≥1) completed by the vehicle 2. The historic data can relate to the last n routes, the best n routes, etc. By way of example, the historic data can be derived from ten (10) routes. Alternatively, the historic data can correspond to the actual coverage during the preceding n weeks or months (where *n*≥1); or the number of calls dropped during the preceding n weeks or months.

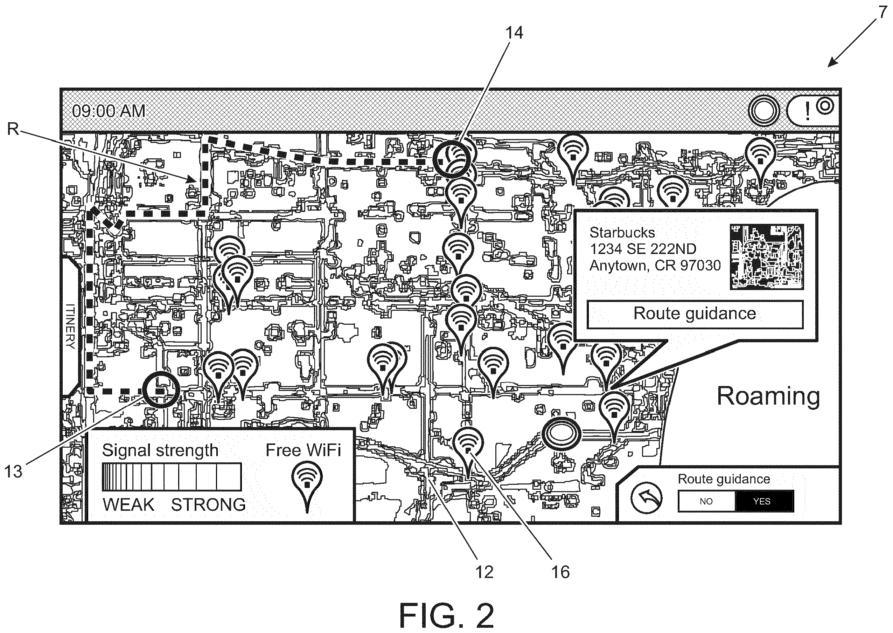

The display screen 6 is a conventional electronic display coupled to the electronic control unit 3 to display map and route information. The electronic control unit 3 can access the map database 9 and output a display signal to display the road network on the display screen 6. As shown in Figure 2, the road network can be overlaid with a layer representing the available communications coverage (identified generally by the reference numeral 12) derived from the communications network database 10. In the present embodiment, the layer representing communications coverage is colour coded such that the strength of the available signal is indicated by colour; blue representing a low signal strength and red representing a high signal strength. The communications network database 10 can also define local area wireless connections, such as Wi-Fi connections. As shown in Figure 2, the location of the local area wireless connections can also be overlaid onto the map.

The at least one electronic processor 7 implements a routing algorithm to plan a route to a destination which is typically specified by a user. By way of example, a dashed line is shown in Figure 2 to represent a sample route R from a start location 13 to a destination 14. The routing algorithm accesses the map database 9 to plan one or more routes R from the start location 13 to the destination 14. The routing algorithm also accesses the communications network database 10 to assess connectivity to the wireless communication network along the one or more planned routes R. The routing algorithm can calculate an expected coverage (for example as a percentage x%) for the wireless network for a planned journey. The routing algorithm can optionally select the route R satisfying particular connectivity criteria for a given journey. For example, the user can stipulate that the routing algorithm plans the route R to maintain connectivity to the wireless communication network for a defined portion of the route. The user can, for example, specify a connectivity threshold and the routing algorithm plans the route R to maintain connectivity for at least that portion of the route. Alternatively, or in addition, the user can specify that the routing algorithm plans the route R such that the signal strength remains above a defined threshold.

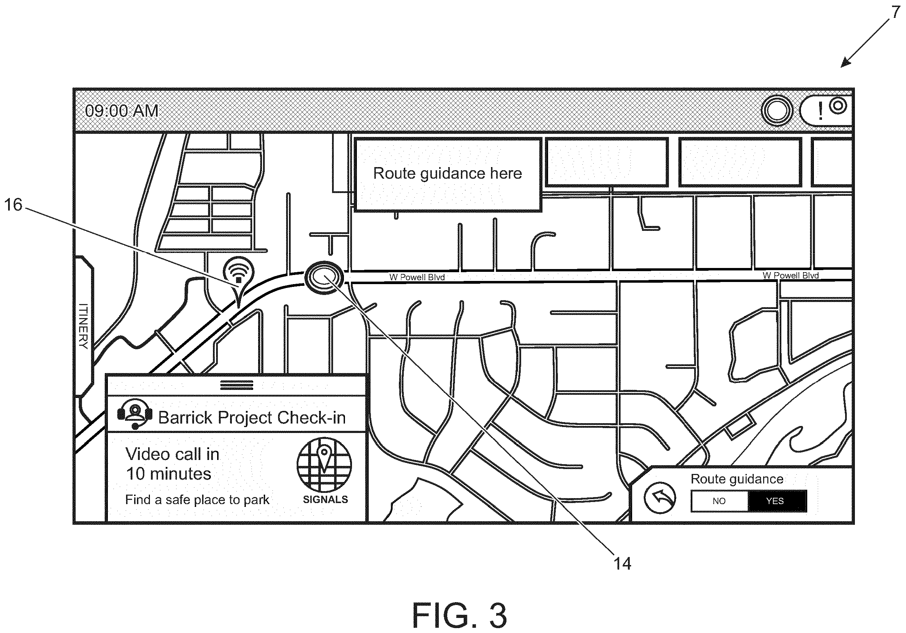

The electronic control unit 3 is connected to a diary database 15 defining user-scheduling information, for example timing for a telephone call or a video conference call. In this arrangement the routing algorithm accesses the diary database 15 and plans the route R in dependence on the user-scheduling information. The routing algorithm can plan the route R such that the vehicle 2 is located in an area having adequate signal strength to complete a scheduled telephone call. Similarly, the routing algorithm can plan the route R to enable the vehicle 2 to stop proximal to a local area wireless connection 16 to complete the scheduled video conference call. This functionality is illustrated in Figure 3 showing a current location 14 of the vehicle 2 in relation to the nearest local area wireless connection 16. The map database 9 can define traffic congestion information, for example defining time taken to travel along a length of road, to enable the routing algorithm to estimate journey times in order to coordinate the location of the vehicle 2 with the user-scheduling information.

The communications network database 10 can define additional network information, for example the type of a cellular network connection. The route planning apparatus 1 can be configured to display the different types of network information in separate layers. Layers can define for one or more of the following: 2G coverage, 3G coverage, 4G coverage, 5G coverage, local area wireless connection (such as Wi-Fi) coverage, dropped calls, network providers, signal strength, transfer speeds, etc. Each layer can be added over the navigation route to show the signal strength along a planned route to allow a user to avoid low coverage areas. By way of example, the signal strength 12 is represented by a single layer displayed over the road network in the arrangement illustrated in Figure 2. The planned route R can be displayed as the topmost layer to aid clarity.

In use, the user specifies the destination (and optionally also the start location, if different from the current location of the vehicle 2) and the routing algorithm uses the map database 9 to plan the route R. The route R is displayed on the map network displayed on the display screen 6 in conventional manner. The user can optionally select one or more layers of network information to overlay onto the map network. The user can, for example, select network coverage to be displayed as a layer over the map network. The user can then choose a route (or modify a planned route) to enable the bandwidth to be maximised for the journey to help maintain connectivity to the wireless communication network. The user can also select a layer showing the location of the local area wireless connections 16.

As the vehicle 2 travels along the route R, the route planning apparatus 1 can access the diary database 15 and present updates linked to upcoming scheduled events (for example video conference call, phone calls, email responses, podcasts etc.) to provide a continuous connection to the wireless communication network. The routing algorithm could, for example, dynamically change the planned route R to compensate for factors such as traffic congestion which would mean that the vehicle 2 would otherwise be located in an area having poor network coverage when a telephone call is scheduled. If an occupant wishes to conduct a video call during a journey, the routing algorithm can plan a route to maintain a connection to the wireless communication network for the duration of the video call. If this is not possible, for example due to insufficient bandwidth over the wireless communication network, the route planning apparatus 1 can plan the route to incorporate a stop or parking location so that the vehicle 2 can park proximal to a local area wireless connection 16 to which the user can connect in order to conduct the video call. The route planning apparatus 1 could present one or more alternative local area wireless connection based on user preferences, for example to stop at a particular coffee shop.

The user can select a method of how connectivity data can be used: for example use of the average connectivity during the last 6 weeks; performance (best/worst), calls dropped, throughput etc.

When a user is making or taking an unscheduled voice or video call on a wireless network, the route planning apparatus can be aware of any upcoming areas having a reduced coverage that may cause the call to be dropped (for example in dependence on historical data). A notification can be output to the user in a timely manner to allow the driver to take appropriate steps, for example to take an alternative route.

It will be appreciated that various changes and modifications can be made to the apparatus and method described herein without departing from the scope of the present invention.

In a variant, the route planning apparatus could be configured dynamically to change a route to allow an ongoing telephone or video call to be conducted without interruption. For example, using the map database 9 and the communications network database 10, in conjunction with the location data generated by the navigation positioning system module 11, the routing algorithm can estimate when and/or where the connection to the wireless communication network will be lost. This could, for example, be determined with reference to historical data. The routing algorithm can dynamically change the planned route R to maintain the connection or can provide a warning before the connection is lost to allow the user to take appropriate action, for example to park the vehicle 2 or to take an alternate route to preserve the connection. The routing algorithm can be configured to provide this functionality automatically without requiring user input.

## Claims

1. A method of planning a route (R) to a destination (14), the method comprising:
accessing a map database (9) defining a road network;
accessing a communications network database (10) defining one or more network parameters for a wireless communication network (16);
using a routing algorithm to plan a route (R) to the destination (14) using the communications network database (10) to estimate connectivity to the wireless communication network (16) along one or more routes (R) generated using the map database (9); and
using a diary database (15) to identify a scheduled time for an event requiring access to the wireless communication network (16);
wherein the routing algorithm is configured to plan the route (R) such that a connection to the wireless communication network (16) is available at the scheduled time; the routing algorithm **characterized by** scheduling a stop at the scheduled time in a location where the connection to the wireless communication network (16) is available.

2. A method of planning a route (R) as claimed in claim 1, wherein the routing algorithm uses the communications network database (10) to plan the route (R) to the destination (14) such that a connection to the wireless communication network (16) is maintained for at least a defined portion of the route (R).

3. A method of planning a route (R) as claimed in claim 1 or claim 2, wherein the routing algorithm is configured to estimate when and/or where a connection to the wireless communication network (16) will be lost and dynamically change the planned route (R) to maintain a connection to the wireless communication network (16).

4. A method of planning a route (R) as claimed in any preceding claim, wherein the one or more network parameters define one or more of the following: signal strength, transfer speeds, dropped call information, data quality, bandwidth, bit error rate, throughput, coverage, bandwidth and network capacity; optionally the routing algorithm uses the communications network database (10) to plan the route (R) to the destination (14) to avoid areas in which the one or more network parameters are below one or more defined threshold; and/or the routing algorithm uses the communications network database (10) to plan the route (R) to the destination (14) to remain in areas in which the one or more network parameters are above one or more defined threshold.

5. A method of planning a route (R) as claimed in any preceding claim, wherein the communications network database (10) defines location information of one or more local area wireless connections (16).

6. A method of planning a route (R) as claimed in any preceding claim, wherein the one or more network parameters comprise historic data collected during one or more previous journeys.

7. A method of planning a route (R) as claimed in any preceding claim comprising: using a display screen (6) to display one or more network parameters for the wireless communication network (16) over the road network; optionally the one or more network parameters are displayed in one or more layers.

8. A route planning apparatus (1) comprising:
a controller (3) comprising an electronic processor (7);
an electronic memory device (4) electrically coupled to the electronic processor (7) and having instructions stored therein,
wherein the electronic processor (7) is configured to access the memory device (4) and execute the instructions stored therein such that it is operable to:
access a map database (9) defining a road network;
access a communications network database (10) defining one or more network parameters
for a wireless communication network (16); and
implement a routing algorithm to plan a route (R) to a destination (14) using the communications network database (10) to estimate connectivity to the wireless communication network (16) along one or more routes (R) generated using the map database (9); and
access a diary database (15) to identify a scheduled time for an event requiring access to the wireless communication network (16);
wherein the routing algorithm is configured to plan the route (R) such that a connection to the wireless communication network (16) is available at the scheduled time, the routing algorithm **characterized by** scheduling a stop at the scheduled time in a location where the connection to the wireless communication network (16) is available.

9. A route planning apparatus (1) as claimed in claim 8, wherein the routing algorithm uses the communications network database (10) to plan the route (R) to the destination (14) such that a connection to the wireless communication network (16) is maintained for at least a defined portion of the route (R).

10. A route planning apparatus (1) as claimed in claim 8 or claim 9, wherein the routing algorithm is configured to estimate when and/or where a connection to the wireless communication network (16) will be lost and dynamically change the planned route (R) to maintain a connection to the wireless communication network (16).

11. A route planning apparatus (1) as claimed in any of claims 8 to 10, wherein the one or more network parameters define one or more of the following: signal strength, transfer speeds, dropped call information, data quality, bandwidth, bit error rate, throughput, coverage, bandwidth and network capacity; optionally the routing algorithm uses the communications network database (10) to plan the route (R) to the destination (14) to avoid areas in which the one or more network parameters are below one or more defined threshold; and/or the routing algorithm uses the communications network database (10) to plan the route (R) to the destination (14) to remain in areas in which the one or more network parameters are above one or more defined threshold.

12. A route planning apparatus (1) as claimed in any one of claims 8 to 11, wherein the communications network database (10) defines location information of one or more local area wireless connections (16).

13. A route planning apparatus (1) as claimed in any one of claims 8 to 12, wherein the one or more network parameters comprise historic data collected during one or more previous journeys.

14. A route planning apparatus (1) as claimed in any one of claims 8 to 13 comprising a display screen (6) for displaying the one or more network parameters overlaid onto the road network and/or the planned route (R); optionally the one or more network paramteres are displayed in one or more layers, each layer representing a different network parameter.

15. A vehicle (2) comprising a route planning apparatus (1) as claimed in any one of claims 8 to 14.

## Patentansprüche

1. Verfahren zum Planen einer Route (R) zu einem Ziel (14), das Verfahren umfassend:
Zugreifen auf eine Kartendatenbank (9), die ein Straßennetz definiert;
Zugreifen auf eine Kommunikationsnetzdatenbank (10), die einen oder mehrere Netzparameter für ein drahtloses Kommunikationsnetz (16) definiert;
Verwenden eines Routing-Algorithmus, um eine Route (R) zu dem Ziel (14) unter Verwendung der Kommunikationsnetzdatenbank (10) zu planen, um eine Konnektivität zu dem drahtlosen Kommunikationsnetz (16) entlang einer oder mehrerer Routen (R), die unter Verwendung der Kartendatenbank (9) erzeugt werden, zu schätzen; und
Verwenden einer Terminkalenderdatenbank (15), um eine festgelegte Zeit für ein Ereignis, das Zugriff auf das drahtlose Kommunikationsnetz (16) erfordert, zu ermitteln;
wobei der Routing-Algorithmus konfiguriert ist, um die Route (R) derart zu planen, dass eine Verbindung zu dem drahtlosen Kommunikationsnetz (16) zu der festgelegten Zeit verfügbar ist;
wobei der Routing-Algorithmus **gekennzeichnet ist durch** Festlegen eines Halts zu der festgelegten Zeit an einem Standort, an dem die Verbindung zu dem drahtlosen Kommunikationsnetz (16) verfügbar ist.

2. Verfahren zum Planen einer Route (R) nach Anspruch 1, wobei der Routing-Algorithmus die Kommunikationsnetzdatenbank (10) verwendet, um die Route (R) zu dem Ziel (14) derart zu planen, dass eine Verbindung zu dem drahtlosen Kommunikationsnetz (16) für mindestens einen definierten Abschnitt der Route (R) aufrechterhalten wird.

3. Verfahren zum Planen einer Route (R) nach Anspruch 1 oder 2, wobei der Routing-Algorithmus konfiguriert ist, um zu schätzen, wann und/oder wo eine Verbindung zu dem drahtlosen Kommunikationsnetz (16) verloren gehen wird und die geplante Route (R) dynamisch zu ändern, um eine Verbindung zu dem drahtlosen Kommunikationsnetz (16) aufrechtzuerhalten.

4. Verfahren zum Planen einer Route (R) nach einem der vorstehenden Ansprüche, wobei der eine oder die mehreren Netzparameter eines oder mehrere von den Folgenden definieren: Signalstärke, Übertragungsgeschwindigkeiten, Informationen zu fallengelassenen Anrufen, Datenqualität, Bandbreite, Bitfehlerrate, Durchsatz, Abdeckung, Bandbreite und Netzkapazität; optional, wobei der Routing-Algorithmus die Kommunikationsnetzdatenbank (10) verwendet, um die Route (R) zu dem Ziel (14) zu planen, um Bereiche, in denen der eine oder die mehreren Netzparameter unter einem oder mehreren definierten Schwellenwerten liegen, zu vermeiden;
und/oder wobei der Routing-Algorithmus die Kommunikationsnetzdatenbank (10) verwendet, um die Route (R) zu dem Ziel (14) zu planen, um in Bereichen, in denen der eine oder die mehreren Netzparameter über einem oder mehreren definierten Schwellenwerten liegen, zu bleiben.

5. Verfahren zum Planen einer Route (R) nach einem der vorstehenden Ansprüche, wobei die Kommunikationsnetzdatenbank (10) Standortinformationen von einer oder mehreren lokalen drahtlosen Verbindungen (16) definiert.

6. Verfahren zum Planen einer Route (R) nach einem der vorstehenden Ansprüche, wobei der eine oder die mehreren Netzparameter historische Daten, die während einer oder mehreren früheren Fahrten gesammelt werden, umfassen.

7. Verfahren zum Planen einer Route (R) nach einem der vorstehenden Ansprüche, umfassend:
Verwenden eines Anzeigebildschirms (6), um einen oder mehrere Netzparameter für das drahtlose Kommunikationsnetz (16) über das Straßennetz anzuzeigen; optional, wobei der eine oder die mehreren Netzparameter in einer oder mehreren Schichten angezeigt werden.

8. Routenplanungseinrichtung (1), umfassend:
eine Steuerung (3), umfassend einen elektronischen Prozessor (7);
eine elektronische Speichervorrichtung (4), die mit dem elektronischen Prozessor (7) elektrisch gekoppelt ist und Anweisungen, die darin gespeichert sind, aufweist,
wobei der elektronische Prozessor (7) konfiguriert ist, um auf die Speichervorrichtung (4) zuzugreifen und die Anweisungen, die darin gespeichert sind, derart auszuführen, dass er betriebsfähig ist zum:
Zugreifen auf eine Kartendatenbank (9), die ein Straßennetz definiert;
Zugreifen auf eine Kommunikationsnetzdatenbank (10), die einen oder mehrere Netzparameter für ein drahtloses Kommunikationsnetz (16) definiert; und
Implementieren eines Routing-Algorithmus, um eine Route (R) zu einem Ziel (14) unter Verwendung der Kommunikationsnetzdatenbank (10) zu planen, um die Konnektivität zu dem drahtlosen Kommunikationsnetz (16) entlang einer oder mehrerer Routen (R), die unter Verwendung der Kartendatenbank (9) erzeugt werden, zu schätzen; und
Zugreifen auf eine Terminkalenderdatenbank (15), um eine festgelegte Zeit für ein Ereignis, das Zugriff auf das drahtlose Kommunikationsnetz (16) erfordert, zu ermitteln;
wobei der Routing-Algorithmus konfiguriert ist, um die Route (R) derart zu planen, dass eine Verbindung zu dem drahtlosen Kommunikationsnetz (16) zu der festgelegten Zeit verfügbar ist, wobei der Routing-Algorithmus **gekennzeichnet ist durch** Festlegen eines Halts zu dem festgelegten Zeitpunkt an einem Standort, an dem die Verbindung zu dem drahtlosen Kommunikationsnetz (16) verfügbar ist.

9. Routenplanungseinrichtung (1) nach Anspruch 8, wobei der Routing-Algorithmus die Kommunikationsnetzdatenbank (10) verwendet, um die Route (R) zu dem Ziel (14) derart zu planen, dass eine Verbindung zu dem drahtlosen Kommunikationsnetz (16) für mindestens einen definierten Abschnitt der Route (R) aufrechterhalten wird.

10. Routenplanungseinrichtung (1) nach Anspruch 8 oder 9, wobei der Routing-Algorithmus konfiguriert ist, um zu schätzen, wann und/oder wo eine Verbindung zu dem drahtlosen Kommunikationsnetz (16) verloren gehen wird und die geplante Route (R) dynamisch zu ändern, um eine Verbindung zu dem drahtlosen Kommunikationsnetz (16) aufrechtzuerhalten.

11. Routenplanungseinrichtung (1) nach einem der Ansprüche 8 bis 10, wobei der eine oder die mehreren Netzparameter eines oder mehrere von den Folgenden definieren: Signalstärke, Übertragungsgeschwindigkeiten, Informationen zu fallengelassenen Anrufen, Datenqualität, Bandbreite, Bitfehlerrate, Durchsatz, Abdeckung, Bandbreite und Netzkapazität; optional, wobei der Routing-Algorithmus die Kommunikationsnetzdatenbank (10) verwendet, um die Route (R) zu dem Ziel (14) zu planen, um Bereiche, in denen der eine oder die mehreren Netzparameter unter einem oder mehreren definierten Schwellenwerten liegen, zu vermeiden;
und/oder wobei der Routing-Algorithmus die Kommunikationsnetzdatenbank (10) verwendet, um die Route (R) zu dem Ziel (14) zu planen, um in Bereichen, in denen der eine oder die mehreren Netzparameter über einem oder mehreren definierten Schwellenwerten liegen, zu bleiben.

12. Routenplanungseinrichtung (1) nach einem der Ansprüche 8 bis 11, wobei die Kommunikationsnetzdatenbank (10) Standortinformationen einer oder mehrerer lokaler drahtloser Verbindungen (16) definiert.

13. Routenplanungseinrichtung (1) nach einem der Ansprüche 8 bis 12, wobei der eine oder die mehreren Netzparameter historische Daten, die während einer oder mehreren früheren Fahrten gesammelt werden, umfassen.

14. Routenplanungseinrichtung (1) nach einem der Ansprüche 8 bis 13, umfassend einen Anzeigebildschirm (6) zum Anzeigen des einen oder der mehreren Netzparameter, die auf das Straßennetz und/oder die geplante Route (R) überlagert werden; optional, wobei der eine oder die mehreren Netzparameter in einer oder mehreren Schichten angezeigt werden, wobei jede Schicht einen anderen Netzparameter darstellt.

15. Fahrzeug (2), umfassend eine Routenplanungseinrichtung (1) nach einem der Ansprüche 8 bis 14.

## Revendications

1. Procédé de planification d'un itinéraire (R) vers une destination (14), le procédé comprenant :
l'accès à une base de données cartographiques (9) définissant un réseau routier ;
l'accès à une base de données de réseau de communication (10) définissant un ou plusieurs paramètres de réseau pour un réseau de communication sans fil (16);
l'utilisation d'un algorithme de calcul d'itinéraire pour planifier un itinéraire (R) vers la destination (14) à l'aide de la base de données de réseau de communication (10) pour estimer la connectivité au réseau de communication sans fil (16) le long d'un ou plusieurs itinéraires (R) générés à l'aide de la base de données cartographique (9) ; et
l'utilisation d'une base de données de journal personnel (15) pour identifier une heure programmée pour un événement nécessitant un accès au réseau de communication sans fil (16) ;
dans lequel l'algorithme de calcul d'itinéraire est configuré pour planifier l'itinéraire (R) de telle sorte qu'une connexion au réseau de communication sans fil (16) est disponible à l'heure programmée ;
l'algorithme de calcul d'itinéraire étant **caractérisé par** la programmation d'un arrêt à l'heure programmée dans un emplacement où la connexion au réseau de communication sans fil (16) est disponible.

2. Procédé de planification d'un itinéraire (R) selon la revendication 1, dans lequel l'algorithme de calcul d'itinéraire utilise la base de données de réseau de communication (10) pour planifier l'itinéraire (R) vers la destination (14) de telle sorte qu'une connexion au réseau de communication sans fil (16) est maintenue pendant au moins une partie définie de l'itinéraire (R).

3. Procédé de planification d'un itinéraire (R) selon la revendication 1 ou la revendication 2, dans lequel l'algorithme de calcul d'itinéraire est configuré pour estimer quand et/ou où une connexion au réseau de communication sans fil (16) sera perdue et changer dynamiquement l'itinéraire planifié (R) pour maintenir une connexion au réseau de communication sans fil (16).

4. Procédé de planification d'un itinéraire (R) selon une quelconque revendication précédente, dans lequel le ou les paramètres de réseau définissent un ou plusieurs des paramètres suivants : une force de signal, des vitesses de transfert, des informations d'appel interrompu, une qualité de données, une bande passante, un taux d'erreur binaire, un débit, une couverture, une bande passante, et une capacité de réseau ; facultativement l'algorithme de calcul d'itinéraire utilise la base de données de réseau de communication (10) pour planifier l'itinéraire (R) vers la destination (14) pour éviter des zones dans lesquelles le ou les paramètres de réseau se trouvent en dessous d'un ou plusieurs seuils définis ;
et/ou l'algorithme de calcul d'itinéraire utilise la base de données de réseau de communication (10) pour planifier l'itinéraire (R) vers la destination (14) pour rester dans des zones dans lesquelles le ou les paramètres de réseau se trouvent au-dessus d'un ou plusieurs seuils définis.

5. Procédé de planification d'un itinéraire (R) selon une quelconque revendication précédente, dans lequel la base de données de réseau de communication (10) définit des informations d'emplacement d'une ou plusieurs connexions sans fil de zone locale (16).

6. Procédé de planification d'un itinéraire (R) selon une quelconque revendication précédente, dans lequel le ou les paramètres de réseau comprennent des données historiques collectées pendant un ou plusieurs trajets précédents.

7. Procédé de planification d'un itinéraire (R) selon une quelconque revendication précédente, comprenant :
l'utilisation d'un écran d'affichage (6) pour afficher un ou plusieurs paramètres de réseau pour le réseau de communication sans fil (16) sur le réseau routier ; facultativement, le ou les paramètres de réseau sont affichés dans une ou plusieurs couches.

8. Appareil de planification d'itinéraire (1) comprenant :
un dispositif de commande (3) comprenant un processeur électronique (7) ;
un dispositif de mémoire électronique (4) couplé électriquement au processeur électronique (7) et ayant des instructions stockées dans celui-ci,
dans lequel le processeur électronique (7) est configuré pour accéder au dispositif de mémoire (4) et exécuter les instructions stockées dans celui-ci de telle sorte qu'il est utilisable pour :
accéder à une base de données cartographique (9) définissant un réseau routier ;
accéder à une base de données de réseau de communication (10) définissant un ou plusieurs paramètres de réseau pour un réseau de communication sans fil (16) ; et
mettre en œuvre un algorithme de calcul d'itinéraire pour planifier un itinéraire (R) vers une destination (14) à l'aide de la base de données de réseau de communication (10) pour estimer la connectivité au réseau de communication sans fil (16) le long d'un ou plusieurs itinéraires (R) générés à l'aide de la base de données cartographiques (9) ; et
accéder à une base de données de journal personnel (15) pour identifier une heure programmée pour un événement nécessitant un accès au réseau de communication sans fil (16) ;
dans lequel l'algorithme de calcul d'itinéraire est configuré pour planifier l'itinéraire (R) de telle sorte qu'une connexion au réseau de communication sans fil (16) est disponible à l'heure programmée, l'algorithme de calcul d'itinéraire étant **caractérisé par** la programmation d'un arrêt à l'heure programmée dans un emplacement où la connexion au réseau de communication sans fil (16) est disponible.

9. Appareil de planification d'itinéraire (1) selon la revendication 8, dans lequel l'algorithme de calcul d'itinéraire utilise la base de données de réseau de communication (10) pour planifier l'itinéraire (R) vers la destination (14) de telle sorte qu'une connexion au réseau de communication sans fil (16) est maintenue pendant au moins une partie définie de l'itinéraire (R).

10. Appareil de planification d'itinéraire (1) selon la revendication 8 ou la revendication 9, dans lequel l'algorithme de calcul d'itinéraire est configuré pour estimer quand et/ou où une connexion au réseau de communication sans fil (16) sera perdue et changer dynamiquement l'itinéraire planifié (R) pour maintenir une connexion au réseau de communication sans fil (16).

11. Appareil de planification d'itinéraire (1) selon l'une quelconque des revendications 8 à 10, dans lequel le ou les paramètres de réseau définissent un ou plusieurs des paramètres suivants : une force de signal, des vitesses de transfert, des informations d'appel interrompu, une qualité de données, une bande passante, un taux d'erreur binaire, un débit, une couverture, une bande passante, et une capacité de réseau ; facultativement l'algorithme de calcul d'itinéraire utilise la base de données de réseau de communication (10) pour planifier l'itinéraire (R) vers la destination (14) pour éviter des zones dans lesquelles le ou les paramètres de réseau se trouvent en-dessous d'un ou plusieurs seuils définis ;
et/ou l'algorithme de calcul d'itinéraire utilise la base de données de réseau de communication (10) pour planifier l'itinéraire (R) vers la destination (14) pour rester dans des zones dans lesquelles le ou les paramètres de réseau se trouvent au-dessus d'un ou plusieurs seuils définis.

12. Appareil de planification d'itinéraire (1) selon l'une quelconque des revendications 8 à 11, dans lequel la base de données de réseau de communication (10) définit des informations d'emplacement d'une ou plusieurs connexions sans fil de zone locale (16).

13. Appareil de planification d'itinéraire (1) selon l'une quelconque des revendications 8 à 12, dans lequel le ou les paramètres de réseau comprennent des données historiques collectées pendant un ou plusieurs trajets précédents.

14. Appareil de planification d'itinéraire (1) selon l'une quelconque des revendications 8 à 13 comprenant un écran d'affichage (6) permettant d'afficher le ou les paramètres de réseau superposés sur le réseau routier et/ou l'itinéraire planifié (R) ; facultativement le ou les paramètres de réseau sont affichés dans une ou plusieurs couches, chaque couche représentant un paramètre de réseau différent.

15. Véhicule (2) comprenant un appareil de planification d'itinéraire (1) selon l'une quelconque des revendications 8 à 14.
